# EUROPÄISCHE PATENTSCHRIFT

(11) **EP 3 447 868 B1**
(45) Veröffentlichungstag und Bekanntmachung des Hinweises auf die Patenterteilung: **21.01.2026**
(21) Anmeldenummer: 18194217.8
(22) Anmeldetag: 28.08.2015
(51) Int. Cl.: H02G 9/04, H02G 3/04, H02G 3/06

(54) **KABELKANALRINNE WELCHE EINGESTANZTE BEFESTIGUNGSSTELLEN MIT SOLLBRUCHSTELLEN AUFWEIST UND VERFAHREN ZUR HERSTELLUNG EINER SOLCHEN KABELKANARINNE**
CABLE CHANNEL WITH STAMPED FIXING POINTS WITH PREDETERMINED BREAKING POINTS AND METHOD FOR PRODUCING SUCH A CABLE CHANNEL
CANAL DE CÂBLE À POINTS DE FIXATION ESTAMPÉS AVEC POINTS DE RUPTURE PRÉDÉTERMINÉS ET SON PROCÉDÉ DE FABRICATION

(43) Veröffentlichungstag der Anmeldung: 27.02.2019
(62) Teilanmeldung aus: 15182882.9
(73) Patentinhaber: Niedax GmbH & Co. KG, 53545 Linz/Rhein (DE)
(72) Erfinder: KLOFT, Martin, 53545 Linz am Rhein (DE); EWENZ, Thomas, 53560 Vettelschoß (DE); TIPMANN, Andreas, 53545 Linz/Rhein (DE)
(74) Vertreter: Vossius & Partner Patentanwälte Rechtsanwälte mbB

(56) Entgegenhaltungen:
- EP-A1- 0 999 627
- EP-A1- 1 345 302
- EP-A1- 2 365 595
- WO-A1-2010/096441
- AT-B- 329 656
- CH-A- 420 308
- DE-A1- 102005 018 812
- DE-U1- 202004 002 027
- DE-U1- 202013 101 484
- FR-A1- 2 955 981
- KR-A- 20050 118 746
- US-A- 2 000 851
- US-A- 2 848 134
- US-B1- 10 020 644

## Beschreibung

Die Vorliegende Erfindung betrifft einen Kabelkanal, der mit einem begehbaren Kabelkanaldeckel ausgestattet werden kann ist, und ein Verfahren zur Herstellung eines Kabelkanals.

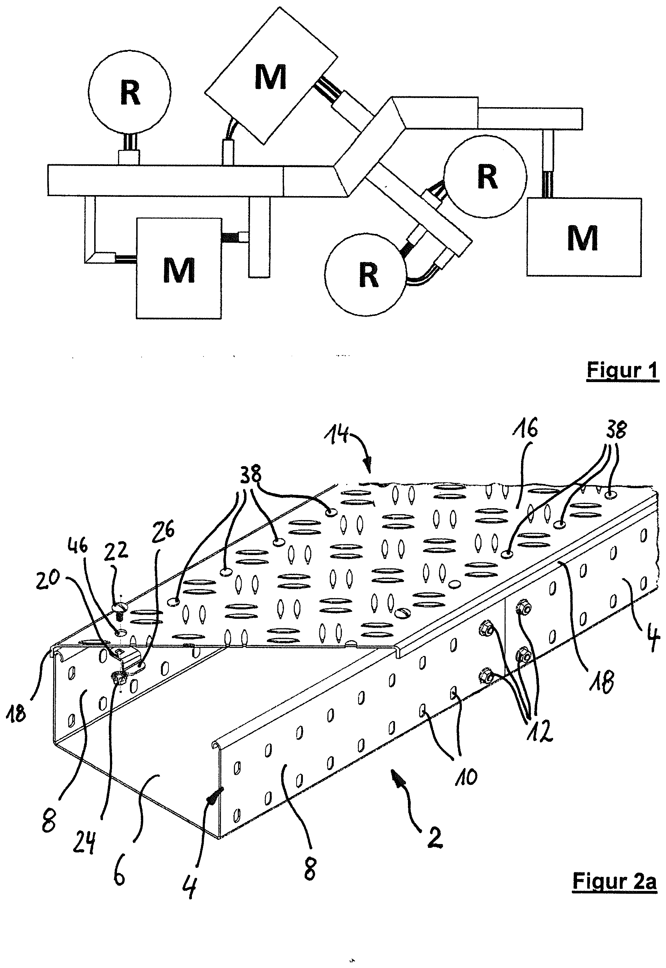

Begehbare Kabelrinnen- oder Kabelkanalsysteme werden beispielsweise eingesetzt, um Versorgungsleitungen einzelner Komponenten von Industrieanlagen zu verketten, insbesondere elektrische Leitungen an Maschinen oder Roboter heranzuführen, wie dies schematisch in Figur 1 dargestellt ist. Hierzu kommen Kabelkanalsysteme unterschiedlicher Größen zum Einsatz, die üblicherweise vor Ort installiert werden. Um die Kabelkanäle an die erforderlichen Stellen zu führen, ist es häufig erforderlich, die Kabelkanlsysteme zuzuschneiden und Abzweigungen vorzusehen, wie dies in Figur 1 schematisch gezeigt ist.

Eine häufig gestellte Anforderung an Kabelkanalsysteme ist, dass diese von Personen begehbar sein müssen. Aus Sicherheitsgründen ist es daher notwendig, die Kabelkanalsysteme derart auszubilden, dass sie eine ausreichende Rutschfestigkeit aufweisen, so dass eine Person, die auf den Kabelkanal tritt, nicht ausrutscht. Hierzu wird üblicherweise ein Deckel mit einer Riffelung an seiner Oberseite verwendet, der auf die Kabelkanalrinne aufgesetzt wird. Zur Montage des Deckels an der Kabelkanalrinne gibt es verschiedene Lösungen, wie zum Beispiel Rastsysteme, bei denen der Deckel direkt auf die Kabelkanalrinne aufrastet, oder es werden Federelemente beziehungsweise Klammern eingesetzt, mit denen der Deckel an einer Kabelkanalrinne befestigt wird. Außerdem ist auch die Verwendung von am Deckel angebrachten Drehriegeln bekannt, mit denen der Deckel an der Kabelkanalrinne arretiert wird.

Im Stand der Technik ist zum Beispiel ein begehbarer Deckel für Kabelkanalsysteme bekannt, der aus einem gebogenem Stahlblech gebildet wird, auf dessen Oberseite ein Aluminium-Riffelblech aufgenietet ist. Zur Befestigung dieses Deckels werden üblicherweise Drehriegel verwendet. Zur Montage der Drehriegel am Kanaldeckel ist es jedoch erforderlich Befestigungsbohrungen im Deckel vorzusehen. Dazu wird ein spezieller Stufenbohrer verwendet, mit dem ein Durchgangsloch durch das Aluminium-Riffelblech und den Stahldeckel gebohrt wird, wobei durch die Abstufung des Bohrers das Alu-Riffelblech in Montagebereich abgetragen wird. Ein derartiges begehbares Kabelrinnensystem ist beispielsweise im Katalog für begehbare Kabelrinnen-Systeme der Firma Niedax GmbH & Co. KG gezeigt.

Ferner sind U-förmige strukturierte Metalldeckel, insbesondere Riffelblechdeckel aus Aluminium und Stahl bekannt. Diese sind über ihre gesamte Außenseite, d.h. an den seitlichen Schenkeln und der Oberseite, mit einer Riffelung versehen.

Die WO 2010/096441 A1 betrifft eine Laufbahnanordnung mit mehreren Elementen, die mehrere Abschnitte mit Kanalabschnitten und Kopplungsabschnitten aufweisen kann, wobei sich jeder der Abschnitte in axialer Richtung erstreckt und mehrere Wände aufweist, die einen allgemein U-förmigen Querschnitt definieren. Jeder Kanalabschnitt kann mindestens eine Öffnung in mindestens einer Wand aufweisen, und jeder der Kopplungsabschnitte weist mindestens ein Loch in mindestens einer Wand auf. Jeder Kopplungsabschnitt kann angepasst sein, um einen oder mehrere der Kanalabschnitte aufzunehmen, so dass axiale Richtungen der aufgenommenen Kanalabschnitte mit der axialen Richtung des Kopplungsabschnitts ausgerichtet sind, und dass mindestens eine der Öffnungen von jedem aufgenommenen Kanalabschnitt mit mindestens einem der Löcher ausgerichtet ist.

Die FR 2 955 981 A1 betrifft eine Kabelrinne, die durch trennbare Elemente verbundene Module aufweist. Aussparungen sind an gegenüberliegenden Kanten der Module ausgebildet und hinter Endlinien senkrecht zu einer Längsachse der Kabelrinne angeordnet. Die Aussparungen sind parallel zur Achse ausgerichtet. Jedes trennbare Element erstreckt sich zwischen Abschnitten der ausgerichteten Aussparungen und ist durch zerbrechliche Zonen mit den Abschnitten verbunden.

Die DE 20 2013 101 484 U1 offenbart einen Kasten für die Elektroinstallation, wobei der Kasten an wenigstens einer seiner Seitenwände wenigstens eine Öffnung bzw. wenigstens eine Ausbrechstelle zum Einbringen einer Öffnung aufweist zur Montage eines Kabelbefestigungselementes. Das Kabelbefestigungselement ist mit einem Gewinde versehen zum Herstellen einer Schraubverbindung zur Befestigung des Kabelbefestigungselementes. Der wenigstens einen Öffnung in der wenigstens einen Seitenwand des Kastens ist ein Gewinde zugeordnet derart, dass das Gewinde einstückig an der Seitenwand des Kastens angebracht ist.

Die DE 10 2005 018 812 A1 beschreibt eine Gehäusewand eines Installationsgeräts, insbesondere eines Installationsverteilers, die eine Durchführung mit einem Durchführungsrand und ein Verschlusselement umfasst, mittels dessen die Durchführung verschlossen ist. Längs des Durchführungsrands ist eine Perforation vorgesehen. Sie hat eine die Gehäusewand vollständig durchdringende Perforationsöffnung und einen Perforationssteg, der das Verschlusselement mit einem die Durchführung umgebenden Wandbereich verbindet. Der Perforationssteg bildet eine Sollbruchstelle zum Entfernen des Verschlusselements.

Die DE 20 2004 002 027 U1 betrifft ein Elektroinstallationsmaterial zur Kontaktierung elektrischer Kabel. Das Elektroinstallationsmaterial weist in zumindest einem Bereich, der für eine Kabeleinführung vorgesehen ist, in diesen Bereich hinein weisende nachgiebige Halteelemente auf.

Die CH 420 308 A offenbart einen im Strangpressverfahren aus einem elektrisch isolierenden Werkstoff hergestellter Kabelführungskanal zur Verlegung von elektrischen Leitungen bestehend aus einem U-förmigen Bodenteil, der durch einen über dessen Seitenwände greifenden Deckel verschließbar ist. In den Seitenwänden sind einzelne Teile teilweise durchgestanzt, wobei die Stanzfugen Sollbruchstellen bilden, oder einzelne Teile sind ganz durchgestanzt und die ausgestanzten Teile sind wieder zurückgedrückt zum Zwecke im ringsum geschlossenen Kanal durch Heraus drücken von gestanzten Teilen entlang ihrer Stanzfugen Öffnungen zum Herausführen von im Kanal geführten, elektrischen Leitungen zu bilden.

Die EP 0 999 627 A1 offenbart einen Kabelkanal mit einem Kabelkanalsockel des Typs mit einem Boden, durch den er an einer beliebigen Wand befestigt werden kann und der wenigstens zwei längs voneinander beabstandete Befestigungslöcher aufweist. Jedes Befestigungsloch, das der Boden aufweist, ist durch einen Verschluss verschlossen, der daraus entfernt werden kann.

Der vorliegenden Erfindung liegt die Aufgabe zu Grunde, einen verbesserten Kabelkanal, ein damit ausgestattetes Kabelkanalsystem sowie ein diesbezügliches Herstellungsverfahren bereitzustellen, wobei insbesondere eine einfachere Montage, eine kostengünstigere Herstellung und eine bessere Recyclingfähigkeit erzielt werden sollen. Diese Aufgabe wird mit den Merkmalen der unabhängigen Ansprüche gelöst. Bevorzugte Ausführungsformen der Erfindung sind in den abhängigen Ansprüchen beschrieben.

Offenbart wird ein begehbarer Kabelkanaldeckel mit einem Abdeckteil und zwei vom Abdeckteil abstehenden Seitenteilen, die jeweils einen Seitenrand des Deckels bilden. Das Abdeckteil verfügt über eine Oberseite und eine Unterseite und erstreckt sich zwischen den beiden Seitenteilen. Vorzugsweise definiert das Abdeckteil und die abstehenden Seitenteile eine im Wesentlichen umgekehrt U-förmige Querschnittsform. Die beiden Seitenteile des Kabelkanaldeckels sind dabei derart ausgebildet, dass sie mit Seitenwänden einer Kabelkanalrinne zusammengeführt werden können, um den Kabelkanaldeckel an der Kabelkanalrinne in einer definierten Position anzubringen.

Die Oberseite des Abdeckteils weist einen strukturierten Mittelbereich auf, der durch Stanzen bzw. Prägen von der Unterseite gebildet ist und eine rutschhemmende Oberfläche bereitstellt. Auf der Oberseite des Abdeckteils ist beidseitig des strukturierten Mittelbereichs zum jeweiligen Seitenrand hin ein strukturfreier Randbereich vorgesehen, der eine Breite von mindestens 5 mm aufweist. Die Breite des strukturfreien Randbereichs ist vorzugsweise 5 mm bis 50 mm, stärker bevorzugt 10 mm bis 40 mm.

Der strukturierte Mittelbereich kann jegliche Form der Strukturierung aufweisen, die eine ausreichend rutschhemmende Oberfläche bereitstellt. Eine ausreichende Rutschhemmung im Sinne der vorwiegenden Erfindung liegt vor, wenn mindestens die Klasse R10 nach DIN 51130:2014-02 erreicht wird. Vorzugsweise ist der strukturierte Mittelbereich in Form eines sich wiederholenden Musters, zum Beispiel in Form einer Riffelung, ausgebildet.

In einer bevorzugten Ausführungsform des Kabelkanaldeckels sind im Abdeckteil eingestanzte Befestigungsstellen zur Montage von Befestigungsmitteln vorgesehen. Die eingestanzten Befestigungsstellen sind vorzugsweise in einem sich wiederholenden Muster in einem Abstand von mindestens 5 mm, vorzugsweise 5 mm bis 70 mm und stärker bevorzugt 10 mm bis 50 mm, vom Seitenrand angeordnet. Der Abstand in Längsrichtung des Kabelkanaldeckels liegt vorzugsweise bei mindestens 25 mm, bevorzugt zwischen 40 mm und 100 mm, stärker bevorzugt zwischen 50 mm und 75 mm. Dadurch ergeben sich auf vorteilhafte Weise ausreichend Befestigungsstellen zur Montage des erfindungsgemäßen Kabelkanaldeckels, unabhängig davon, auf welche Länge der Deckel bei der Installation zugeschnitten wird.

Die Befestigungsstellen sind beispielsweise so angeordnet, dass sie in Zwischenbereichen der eingestanzten Strukturierung des Mittelbereichs liegen. Vorzugsweise sind die Befestigungsstellen derart eingestanzt, dass sie jeweils in ihrem Randbereiche mindestens eine Sollbruchstelle definieren, so dass ein eingestanzter Teil ("Butzen") vom Abdeckteil durch Aufbrechen der Sollbruchstelle, beispielsweise durch Ausschlagen von der Unter- oder Oberseite des Abdeckteils, geöffnet werden kann. Dadurch kann der erfindungsgemäße Kabelkanaldeckel bei der Installation an jeder gewünschten Stelle mit einem Befestigungsmittel (z. B. Drehriegel oder Schraube) versehen werden, ohne dass eine Bohrung vorgesehen werden muss. Dadurch entfällt die Verwendung einer bisher erforderlichen Bohrmaschine samt Spezialwerkzeug, es werden keine Späne erzeugt und die Montage ist deutlich zügiger mit besserem Montageergebnis durchzuführen. Das Ausbrechen der Befestigungsstellen kann beispielsweise mit einem leichten Körnerschlag bewerkstelligt werden, wobei lediglich der Butzen als Abfall anfällt und entfernt werden muss. Dabei ist es ferner von Vorteil, dass die Befestigungsstellen verschlossen bleiben und somit der Kabelkanaldeckel keinerlei Öffnungen für das Eindringen von Schmutz und Flüssigkeiten bilden.

Der Kabelkanaldeckel ist vorzugsweise aus Metall, insbesondere einem Aluminium- oder Stahlblech, gebildet. Eine Sandwich-Struktur wie im Stand der Technik ist nicht erforderlich. Vielmehr ist der erfindungsgemäße Kanaldeckel einlagig ausgebildet.

Da der Seitenrand des erfindungsgemäßen Kabelkanals sowie vorzugsweise die Seitenteile strukturfrei sind, ist eine einfache Umformung des Seitenrands bei der Herstellung gewährleistet. Darüber hinaus wird dadurch ermöglicht, dass zur Befestigung des erfindungsgemäßen Kabelkanaldeckels auch Deckelhaltefedern an den Seitenteilen angebracht werden können, da dort keine Strukturierung vorhanden ist.

Die Erfindung ist ferner auf einen Kabelkanal nach Anspruch 1 als Teil eines Kabelkanal- oder Kabelrinnensystems mit einer Kabelkanalrinne, einem begehbaren Kabelkanaldeckel wie vorstehend beschrieben und vorzugsweise mindestens einem Befestigungsmittel, z.B. mindestens einer Deckelhaltefeder und/oder mindestens einem Drehriegel, zur Befestigung des Kabelkanaldeckes an der Kabelkanalrinne gerichtet.

Die Kabelkanalrinne weist einen Boden und Seitenwände auf. In den Seitenwänden sind eingestanzte Befestigungsstellen vorgesehen, die derart ausgebildet sind, dass jeweils in ihrem Randbereich mindestens eine Sollbruchstelle definiert ist, so dass ein eingestanzter Teil ("Butzen") der Seitenwand durch Aufbrechen der Sollbruchstelle geöffnet werden kann. Dies kann insbesondere durch Ausschlagen von innen oder außen erfolgen.

Des Weiteren wird ein Verfahren zur Herstellung eines begehbaren Kabelkanaldeckels offenbart. Dazu wird zunächst ein Blechband mit einer Oberseite und einer Unterseite, vorzugsweise von einer Rolle oder einem Coil, bereitgestellt. Das Blechband wird dann beispielsweise einer Umformstation zugeführt, in der ein strukturierter Mittelbereich im Blechband von der Unterseite eingestanzt oder eingeprägt wird, um auf der Oberseite eine rutschhemmende Oberfläche auszubilden. Des Weiteren werden die beiden Längsränder des Blechbandes umgebogen bzw. abgekantet, um zwei Seitenteile und einen dazwischen liegenden Abdeckteil des Kabelkanaldeckels auszubilden. Das Abkanten kann vor, zusammen mit oder nach dem Ausbilden des strukturierten Mittelbereichs erfolgen. Die Oberseite des Abdeckteils bleibt beidseitig des strukturierten Mittelbereichs bis zu einem durch die jeweiligen Seitenteile gebildeten Seitenrand ohne Strukturierung und bildet einen strukturfreien Randbereich mit einer Breite von mindestens 5 mm. Diese Breite ist vorzugsweise 5 mm bis 50 mm und stärker bevorzugt 10 mm bis 40 mm.

Das Verfahren kann ferner einen Schritt des Einstanzens von Befestigungsstellen im Mittelbereich zur Montage von Befestigungsmitteln aufweisen. Die Befestigungsstellen werden vorzugsweise so eingestanzt, dass jeweils im Randbereich der Befestigungsstellen mindestens eine Sollbruchstelle gebildet ist, so dass ein eingestanzter Teil ("Butzen") vom Abdeckteil durch Aufbrechen der Sollbruchstelle geöffnet werden kann. Dies kann insbesondere durch Ausschlagen von der Unter- oder Oberseite des Abdeckteils erfolgen.

Die Befestigungsstellen wiederholen sich vorzugsweise in einem Muster und haben einen Abstand von mindestens 5 mm, bevorzugt 5 mm bis 70 mm und stärker bevorzugt 10 mm bis 50 mm, vom Seitenrand. Der Abstand benachbarter Befestigungsstellen zueinander in Längsrichtung beträgt vorzugsweise mindestens 25 mm, bevorzugt 40 mm bis 100 mm, stärker bevorzugt 50 mm bis 75 mm.

Das Verfahren ist insbesondere von Vorteil, da es als kontinuierliches Herstellungsverfahren einen effektiven Herstellungsprozess ermöglicht. Die Kabelkanaldeckel können in beliebigen Längen bereitgestellt werden.

Nachfolgend werden bevorzugte Ausführungsformen der Erfindung anhand der Zeichnungen beispielhaft beschrieben. Es zeigen:
- Figur 1: eine schematische Darstellung eines Installationsbeispiels für Kabelkanlsysteme;
- Figur 2a: eine räumliche Darstellung eines erfindungsgemäßen Kabelkanalsystems, bei dem der Kabelkanaldeckel durch Drehriegel befestigt wird;
- Figur 2b: eine räumliche Darstellung eines erfindungsgemäßen Kabelkanalsystems, bei dem der Kabelkanaldeckel mittels einer Deckelhaltefeder befestigt wird;
- Figur 2c: Eine räumliche Darstellung eines Kabelkanalsystems, bei dem der Kabelkanaldeckel mit einem Drehriegel und einer Deckelhaltefeder befestigt wird;
- Figur 3: eine vergrößerte Darstellung einer Ausführungsform eines Kabelkanaldeckels;
- Figur 4: eine räumliche Darstellung des in Figur 3 gezeigten Kabelkanaldeckels mit einem Drehriegel;
- Figur 5: eine räumliche Darstellung einer Kabelkanalrinne zur Verwendung mit einem erfindungsgemäßen Kabelkanalsystem;
- Figur 6: einen Querschnitt durch die Rinne gemäß Figur 5; und
- Figur 7: eine räumliche Darstellung der Verbindung mehrerer Kabelkanalrinnen gemäß Figur 5 miteinander.

In Figur 1 ist eine schematische Darstellung der Verwendung von begehbaren Kabelkanalsystemen dargestellt. Wie gezeigt verläuft ein Hauptkanal zwischen verschiedenen Maschinen M und Robotern R, wobei Abzweigungen zu den jeweiligen Maschinen M und Robotern R führen. Es ist ebenfalls erkennbar, dass Kabelkanlsysteme mit unterschiedlichen Breiten Anwendung finden.

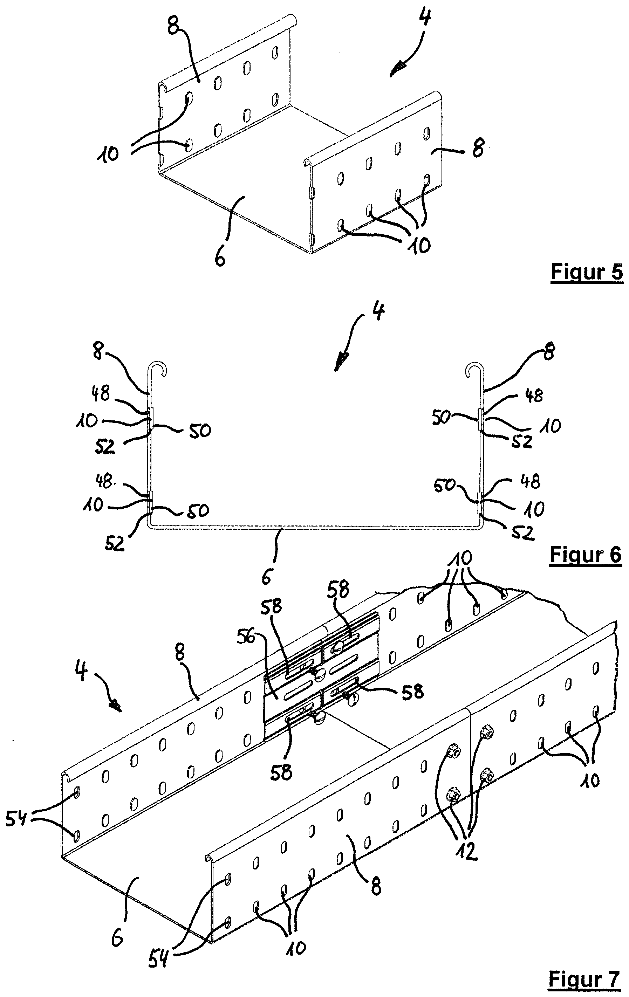

In Figuren 2a bis 2c sind erfindungsgemäße Kabelkanlsysteme bzw. Kabelkanäle 2 in räumlicher Darstellung gezeigt. Der Kabelkanal 2 weißt eine Kabelkanalrinne 4 mit einem Boden 6 und Seitenwänden 8 auf. Die Seitenwände 8 sind durch Umformen, insbesondere endloses Profilieren (Rollbiegen) oder Abkanten eines ursprünglich ebenen Blechbandes ausgebildet. An den oberen Enden der Seitenwände 8 sind diese vorzugsweise nach innen umgefalzt. An den Seitenwänden 8 sind ferner Befestigungsstellen 10 vorgesehen, die beispielsweise als Öffnungen ausgebildet sein können, um einzelne Kabelrinnenelemente 4 miteinander zu verbinden. Hierzu kann beispielsweise im Bereich des Übergangs von einer Kabelkanalrinne 4 zur nächsten ein Verbinder vorgesehen sein, der mittels Schrauben 12 die beiden Kabelkanalrinnen 4 miteinander verbindet. Dies wird in Zusammenhang mit Figur 6 nachfolgend ausführlicher beschrieben.

Der erfindungsgemäße Kabelkanal 2 verfügt ferner über einen Kabelkanaldeckel 14, der auf der Kabelkanalrinne 4 anbringbar ist. Der Kabelkanaldeckel 14 hat ein sich im Wesentlichen über die Breite der Kabelkanalrinne 4 erstreckendes Abdeckteil 16 und zwei vom Abdeckteil 16 abstehende Seitenteile 18. In der Ausführungsform gemäß Figur 2a ist der begehbare Kabelkanaldeckel 14 in einem auf die Kabelkanalrinne 4 aufgesetzten Zustand dargestellt. Zur Fixierung des Kabelkanaldeckels 14 an der Kabelkanalrinne 4 sind in dieser Ausführungsform Drehriegel 20 vorgesehen, die mittels einer Schraube 22 und Mutter 24 angeschraubt sind. Zum Verriegeln des Kabelkanaldeckels 14 an der Kabelkanalrinne 4 wird der Drehriegel mit Hilfe der Schraube 22 derart gedreht, dass ein ausklagender Vorsprung 26 unter den nach innen gebogenen Rand einer Seitenwand 8 der Kabelkanalrinne greift.

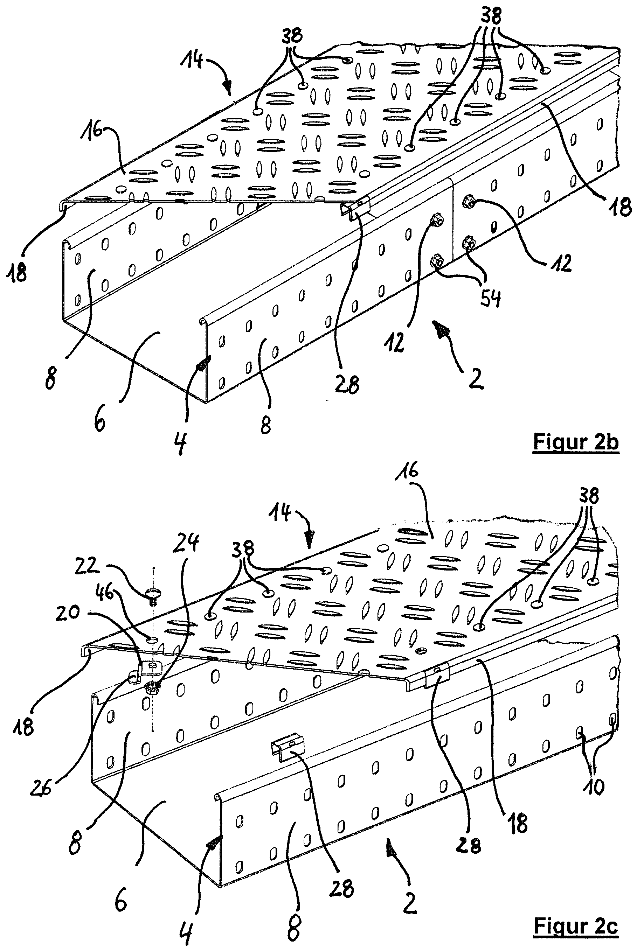

In Figur 2b gezeigte Ausführungsform unterscheidet sich im Wesentlichen von der vorstehend beschriebenen Ausführungsform nach Figur 2a dadurch, dass zur Befestigung des Kabelkanaldeckels 14 Haltefedern 28 zum Einsatz kommen, die einerseits über die nach unten vorstehenden Seitenteile 18 des Kabelkanaldeckels 14 aufgesteckt werden und andererseits über den nach innen gebogenen Rand der Seitenwände 8 der Kabelkanalrinne 4 zur Verriegelung des Kabelkanaldeckels 14 eingerastet werden.

In der in Figur 2c dargestellten Ausführungsform ist gezeigt, dass der Kabelkanaldeckel 14 sowohl mit Drehriegeln 20 als auch mit Haltefedern 28 an der Kabelkanalrinne 4 befestigt werden kann.

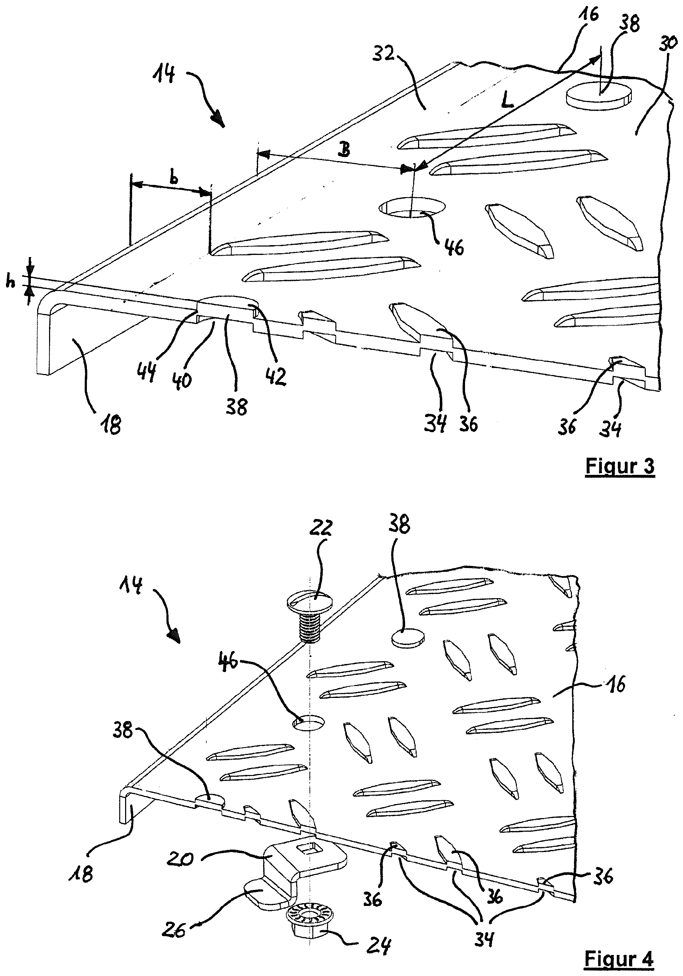

Eine Ausführungsform des Kabelkanaldeckels 14 wird nachfolgend unter Bezugnahme auf die Figuren 3 und 4 näher beschrieben. Der Deckel 14 verfügt, wie bereits vorstehend beschrieben, über ein Abdeckteil 16, das im Wesentlichen die obere Öffnung der Kabelkanalrinne 4 abdeckt, und zwei sich davon nach unten ersteckende Seitenteile 18, die jeweils seitlich mit den Seitenwänden 8 der Kabelkanalrinne 4 zusammengeführt werden können, um den Deckel 14 auf der Kabelkanalrinne 4 seitlich zu fixieren.

Der Deckel 14 wird vorzugsweise in einem kontinuierlichen Herstellverfahren produziert. Dabei wird zunächst ein Blechband mit einer Breite bereitgestellt, die der Gesamtbreite des Abdeckteils 16 zuzüglich der Höhe der beiden Seitenteile 18 entspricht. Das Blechband wird üblicherweise in Form einer Rolle bzw. eines Coils bereitgestellt. Die beiden Seitenteile 18, die jeweils einen Seitenrand des Kabelkanaldeckels 14 bilden, werden vorzugsweise durch Umbiegen bzw. Abkanten in einem kontinuierlichen Umformprozess gebildet.

Das Abdeckteil 16 ist im Wesentlichen in drei Teilbereiche unterteilt, nämlich einen mit einer Strukturierung versehenen Mittelbreich 30 sowie einen jeweils dem Seitenrand zugewandten Randbereich 32, der keine Strukturierung aufweist. Der strukturierte Mittelbereich 30 wird durch Stanzen bzw. Prägen von der Unterseite des Blechbands bzw. Abdeckteils 16 ausgebildet. Durch das Einstanzen von Vertiefungen 34 von der Unterseite wird auf der gegenüberliegenden Oberseite eine im Wesentlichen komplementäre Auswölbung 36 erzeugt, durch die in der Gesamtheit ein strukturierter Mittelbreich 30 bereitgestellt wird. Der strukturierte Mittelbereich 30 ist derart ausgebildet, dass auf der Oberseite des Abdeckteils eine rutschhemmende Oberfläche ausgebildet ist, die mindestens eine Rutschfestigkeit der Klasse R10 nach DIN 51130:2014-02 liefert. In einer bevorzugten Ausführungsform ist der strukturierte Mittelbereich, der die rutschhemmende Oberfläche bildet, in Form eines sich wiederholenden Musters, z. B. in Form einer Riffelung, bereitgestellt. Ein derartiges Muster lässt sich auf einfache Weise in einem kontinuierlichen Herstellungsverfahren einstanzen bzw. prägen. Eine beispielhafte Strukturierung ist das in den Figuren 2a, 2b, 2c, 3 und 4 gezeigte Riffelmuster mit jeweils zwei parallelen Riffelementen, die nebeneinander in einer Reihe angeordnet sind, wobei in der darauffolgenden Reihe die Riffelemente im Wesentlichen um 90° versetzt dazu angeordnet sind. Erfindungsgemäß können jedoch auch andere Strukturierungen zum Einsatz kommen, die eine ausreichend hohe Rutschfestigkeit auf der Oberseite des Kabelkanaldeckels 14 bereitstellen.

Die beiden jeweils seitlich des Mittelbereichs 30 vorgesehenen Randbereiche 32 sind ohne Strukturierung ausgebildet und stellen daher eine im Wesentlichen glatte Ober- und Unterseite bereit. Die Breite b des strukturfreien Randbereichs 32 beträgt mindestens 5 mm gemessen von der Außenseite der Seitenteile 18 bis zum nächstgelegenen Strukturelement des strukturierten Mittelbereichs 30. Vorzugsweise beträgt die Breite b 5 mm bis 50 mm, insbesondere 10 mm bis 40 mm. Es ist zwar bevorzugt, dass die Breite b beider Randbereiche 32 in etwa gleich groß ist, jedoch können sich die Breiten b beiderseits des strukturierten Mittelbereichs 30 auch unterscheiden.

Durch das Vorsehen strukturfreier Randbereiche 32 wird einerseits das Herstellen der Seitenteile 18 erleichtert, in dem ein leichteres Umbiegen des Blechbandes gewährleistet ist, und andererseits können die Seitenteile 18, die vorzugsweise ebenfalls strukturfrei ausgebildet sind, durch die Verwendung herkömmlicher Haltefedern an der Kabelkanalrinne montiert werden.

Gemäß einer besonders bevorzugten Ausführungsform des Kabelkanaldeckels 14 sind zusätzlich zur Strukturierung im Mittelbereich 30 eingeprägte bzw. eingestanzte potenzielle Befestigungsstellen 38 vorgesehen. Diese Befestigungsstellen 38 sind vorzugsweise in einem sich wiederholenden Muster entlang der Länge ausgebildet. Der Abstand B der Befestigungsstellen 38 vom Seitenrand des Deckels 14 beträgt vorzugsweise mindestens 5 mm, starker bevorzugt 5 mm bis 70 mm und insbesondere 10 mm bis 50 mm. In Längsrichtung sind benachbarte Befestigungsstellen 38 vorzugsweise mit einem Abstand L voneinander vorgesehen, der insbesondere mindestens 25 mm beträgt und bevorzugt im Bereich von 40 mm bis 100 mm, stärker bevorzugt 50 mm bis 75 mm zu einander liegt.

Die eingeprägten Befestigungsstellen 38 sind im hergestellten Zustand des Kabelkanaldeckels lediglich eingeprägt, so dass sich an der Innenseite eine Vertiefung 40 und an der Außenseite eine Auswölbung 42 ergibt. Mit anderen Worten sind die Befestigungsstellen 38 im hergestellten Zustand (noch) keine Öffnungen, an denen Befestigungsmittel, beispielsweise in Form von Drehriegeln 20 mit Schrauben 22 montiert werden können. Vielmehr bilden die Befestigungsstellen 38 potenzielle Befestigungsmöglichkeiten aus, die bei der Installation des erfindungsgemäßen Kabelkanaldeckels 14 individuell verwendet werden können, um Befestigungsmittel (z.B. Drehriegel 20) daran zu montieren. Hierzu ist die Stanzung bzw. Prägung für die Befestigungsstellen 38 derart ausgebildet, dass in einem Randbereich, insbesondere im Bereich des Übergangs der Vertiefung 40 zur Auswölbung 42 eine Sollbruchstelle 44 bildet. Dadurch wird gewährleistet, dass der eingestanzte Teil bzw. Butzen durch Aufbrechen der Sollbruchstelle 44 entfernt werden kann, so dass sich eine geöffnete Befestigungsstelle 46 erzeugen lässt. Dadurch ergibt sich insbesondere die Möglichkeit, dass unabhängig von der Installationssituation immer ausreichend Befestigungsstellen 38 vorhanden sind, die zur Verriegelung des Deckels 14 an einer Kabelkanalrinne 4 verwendet werden können. Je nach Bedarf können die Befestigungsstellen 38 nämlich beispielsweise durch einfaches Ausschlagen mit einem Körner von der Innen- und/oder Außenseite geöffnet werden, um beispielsweise einen Drehriegel 20 daran zu montieren. Somit ist eine sichere Montage des Deckels 14 immer gewährleistet. Gleichzeitig kann auf die Verwendung von Spezialwerkzeugen wie Stufenbohrer, Bohren am Installationsort und so weiter verzichtet werden. Die Montage des Kabelkanaldeckels 14 gemäß der vorliegenden Erfindung ist somit deutlich erleichtet und gleichzeitig wird eine verbesserte Verriegelung gewährleistet. Die Dichtigkeit bleibt dabei in höchstem Maße gewährleistet.

Es ist bevorzugt, dass die Befestigungsstellen 38 in strukturierten Mittelbereich 30 derart angeordnet sind, dass sie in Zwischenräumen zwischen den Strukturelementen der Strukturierung, die die rutschhemmende Oberfläche bereitstellt, vorgesehen sind. In diesem Zusammenhang ist anzumerken, dass die rutschhemmende Eigenschaft des erfindungsgemäßen Kabelkanaldeckels mit einer Klasse von mindestens R10 lediglich durch die Strukturierung des Mittelbereichs erzielt wird, ohne dass die eingeprägten Befestigungsstellen 38 dabei berücksichtigt sind. Unter Berücksichtigung der weiteren Strukturierung durch die Befestigungsstellen 38 ist eine weitere Erhöhung der Rutschhemmung, insbesondere bis zur Klasse R11 oder darüber hinaus möglich.

Nachfolgend wird anhand der Figuren 5, 6 und 7 eine erfindungsgemäße Kabelkanalrinne 4, insbesondere zur Verwendung mit einem Kabelkanaldeckel 14, näher beschrieben. Wie bereits vorstehend im Zusammenhang mit Figuren 2a, 2b und 2c beschrieben, verfügt die Kabelkanalrinne 4 über einen Boden 6 und Seitenwände 8. Im Bereich der Seitenwände 8 sind eingestanzte bzw. eingeprägte Befestigungsstellen 10 vorgesehen. Die Befestigungsstellen 10 sind ähnlich wie die Befestigungsstellen 38 im Kabelkanaldeckel 14 im Herstellungsprozess eingestanzt bzw. eingeprägt und bilden potenzielle Befestigungsstellen aus. Damit sind auch die Befestigungsstellen 10 im hergestellten Zustand noch verschlossen, wie dies insbesondere in der Querschnittsansicht gemäß Figur 6 deutlich zu erkennen ist. Jede der Befestigungsstellen 10 verfügt über eine jeweilige Vertiefung 48, die vorzugsweise auf der Außenseite der Seitenwände 8 liegt, jedoch auch an der Innenseite vorgesehen sein kann, sowie eine im Wesentlichen komplementär dazu ausgebildete Auswölbung 50 auf der jeweiligen gegenüberliegenden Seite. Im Übergangsbereich zwischen der Vertiefung 48 und der Aufwölbung 50 ist wiederum eine Sollbruchstelle 52 vorgesehen, die zum Öffnen der Befestigungsstellen 10 aufgebrochen werden kann. Dies kann beispielsweise durch einfaches Herausschlagen des eingestanzten Teils bzw. Stanzbutzens von innen oder außen erfolgen. Dadurch lassen sich die vorgefertigten Befestigungsstellen 10 individuell und je nach Bedarf in geöffnete Befestigungsstellen 54 umwandeln, an denen in Längsrichtung benachbarte Kabelkanalrinnen miteinander verbunden werden können. Dies ist in Figur 7 näher gezeigt.

Erfindungsgemäss kommt zur Verbindung benachbarter Kabelkanalrinnen 4 ein an der jeweiligen Seitenwand 8 angebrachtes Verbindungselement 56 zum Einsatz. Das Verbindungselement 56 verfügt über mindestens zwei, bevorzugt mindestens vier, Langlöcher 58, die derart ausgebildet sind, dass sämtliche Lochabstände in Längsrichtung beabstandeter Befestigungsstellen 10 bzw. 54 verwendet werden können, um die Kabelkanalrinnen 4 miteinander zu verbinden.

Damit stellt die vorliegende Erfindung ein Kabelkanlsystem bereit, das höchst flexibel und effizient eingesetzt werden kann. Es ist zudem leicht und kostengünstig herzustellen und liefert damit erhebliche Vorteile gegenüber dem Stand der Technik bei gleichzeitig erhöhter Rutschfestigkeit.

## Patentansprüche

1. Kabelkanalrinne (4) mit einem Boden (6) und Seitenwänden (8), wobei die Kabelkanalrinne (4) aus Blech durch Umformen gebildet ist und in die Seitenwände (8) eingestanzte Befestigungsstellen (10) aufweist, wobei die Kabelkanalrinne (4) zur Verbindung benachbarter Kabelkanalrinnen (4) ein an einer jeweiligen Seitenwand (8) angebrachtes Verbindungselement (56) aufweist, das über mindestens zwei Langlöcher (58) verfügt, die derart ausgebildet sind, dass sämtliche Lochabstände in Längsrichtung beabstandeter Befestigungsstellen (10) verwendet werden können, um die Kabelkanalrinnen (4) miteinander zu verbinden, **dadurch gekennzeichnet, dass** die Befestigungsstellen (10) derart eingestanzt sind, dass jeweils in ihrem Randbereich mindestens eine Sollbruchstelle (52) definiert ist, so dass ein eingestanzter Teil der Kabelkanalrinne (4) durch Aufbrechen der Sollbruchstelle (52) geöffnet werden kann.

2. Kabelkanalrinne (4) nach Anspruch 1, wobei der eingestanzte Teil der Kabelkanalrinne (4) durch Ausschlagen von einer Innen- oder Außenseite der Kabelkanalrinne (4) geöffnet werden kann.

3. Kabelkanalrinne (4) nach Anspruch 1 oder 2, wobei die Befestigungsstellen (10) im hergestellten Zustand verschlossen sind.

4. Kabelkanalrinne (4) nach einem der vorhergehenden Ansprüche, wobei die Befestigungsstellen (10) jeweils eine Vertiefung (48) auf einer Seite der Kabelkanalrinne und eine im Wesentlichen komplementär dazu ausgebildete Auswölbung (50) auf der gegenüberliegenden Seite der Kabelkanalrinne aufweisen.

5. Kabelkanalrinne (4) nach Anspruch 4, wobei die Vertiefungen (48) auf der Außenseite und/oder Innenseite vorgesehen sind.

6. Kabelkanalrinne (4) nach Anspruch 4 oder 5, wobei die Sollbruchstelle (52) in einem Übergangsbereich zwischen der Vertiefung (48) und der Auswölbung (50) vorgesehen ist.

7. Kabelkanalrinne (4) nach einem der Ansprüche 1 bis 6, wobei das Verbindungselement (56) über mindestens vier Langlöcher (58) verfügt, die derart ausgebildet sind, dass sämtliche Lochabstände in Längsrichtung beabstandeter Befestigungsstellen (10) verwendet werden können, um die Kabelkanalrinnen (4) miteinander zu verbinden.

8. Kabelkanal (2) mit einer Kabelkanalrinne nach einem der vorstehenden Ansprüche und einem begehbaren Kabelkanaldeckel (14) mit einem Abdeckteil (16), das eine Oberseite und eine Unterseite hat, und zwei vom Abdeckteil (16) abstehende Seitenteile (18), die jeweils einen Seitenrand des Kabelkanaldeckels (14) bilden, wobei die Oberseite des Abdeckteils (16) einen Mittelbereich (30) mit einer rutschhemmenden Oberfläche aufweist, der durch Stanzen von der Unterseite gebildet ist, und wobei das Abdeckteil (16) eingestanzte Befestigungsstellen (38) zur Montage von Befestigungsmitteln aufweist.

9. Kabelkanal (2) nach Anspruch 8, wobei die Befestigungsstellen (38) des Kabelkanaldeckels (14) in einem sich wiederholenden Muster in einen Abstand (B) von mindestens 5 mm, bevorzugt 5 mm bis 70 mm und stärker bevorzugt 10 mm bis 50 mm, vom Seitenrand und mit einem Abstand (L) von mindestens 25 mm, bevorzugt 40 mm bis 100 mm, stärker bevorzugt 50 mm bis 75 mm, zueinander in Längsrichtung des Kabelkanaldeckels (14) angeordnet sind.

10. Kabelkanal (2) nach Anspruch 8 oder 9, wobei die Befestigungsstellen (38) des Kabelkanaldeckels (14) so angeordnet sind, dass sie in Zwischenbereichen der Strukturierung des Mittelbereichs (30) liegen.

11. Kabelkanal (2) nach einem der Ansprüche 8 bis 10, wobei die Befestigungsstellen (38) des Kabelkanaldeckels (14) derart eingestanzt sind, dass jeweils in ihrem Randbereich mindestens eine Sollbruchstelle (44) definiert ist, so dass ein eingestanzter Teil des Abdeckteils (16) durch Aufbrechen der Sollbruchstelle (44), insbesondere durch Ausschlagen von der Unter- oder Oberseite des Abdeckteils (16), geöffnet werden kann.

12. Kabelkanal (2) nach einem der Ansprüche 8 bis 11, ferner mit mindestens einem Befestigungsmittel, insbesondere mindestens einer Deckelhaltefeder (28) und/oder mindestens einem Drehriegel (20), zur Befestigung des Kabelkanaldeckels (14) an der Kabelkanalrinne (4).

13. Verfahren zur Herstellung einer Kabelkanalrinne (4) nach einem der Ansprüche 8 bis 12 mit den Schritten:
a) Bereitstellen eines Blechbandes mit einer Oberseite und einer Unterseite;
b) Einstanzens von Befestigungsstellen (10) zur Montage von Befestigungsmitteln derart, dass jeweils im Randbereich mindestens eine Sollbruchstelle (52) definiert ist, so dass ein eingestanzter Teil des Blechbandes durch Aufbrechen der Sollbruchstelle (52), insbesondere durch Ausschlagen von einer Seite, geöffnet werden kann; und
c) Umformen der beiden Längsränder des Blechbandes, um zwei Seitenwände (8) und einen dazwischen liegenden Boden (6) der Kabelkanalrinne (4) zu bilden.

## Claims

1. A cable channel tray (4) with a bottom (6) and lateral walls (8), wherein the cable channel tray (4) is formed from a steel sheet by way of a forming process and comprises fixing points (10) stamped into the lateral walls (8), wherein the cable channel tray (4) comprises a connection member (56) mounted on the respective lateral wall (8) in order to connect adjacent cable channel trays (4), said connection member (56) comprising at least two slots (58) configured such that all hole spacings in the longitudinal direction of spaced-apart fixing points (10) may be used in order to connect the cable channel trays (4) to each other,
**characterized in that**
the fixing points (10) are stamped such that each of them defines at least one predetermined breaking point (52) in its periphery so that a stamped part of the cable channel tray (4) may be opened by means of breaking open the predetermined breaking point (52).

2. The cable channel tray (4) according to claim 1, wherein the stamped part of the cable channel tray (4) may be opened by knocking out from an inner or outer side of the cable channel tray (4).

3. The cable channel tray (4) according to claim 1 or 2, wherein the fixing points (10) are closed in the produced state.

4. The cable channel tray (4) according to any one of the preceding claims, wherein the fixing points (10) each have a recess (48) on one side of the cable channel tray and, formed essentially complementary thereto, a curvature (50) on the respective opposite side of the cable channel tray.

5. The cable channel tray (4) according to claim 4, wherein the recesses (48) are provided at the outer surface and/or the inner surface.

6. The cable channel tray (4) according to claim 4 or 5, wherein the predetermined breaking point (52) is provided in a transition region between the recess (48) and the curvature (50).

7. The cable channel tray (4) according to according to any one of claims 1 to 6, wherein the connection member (56) comprises at least four slots (58) configured such that all hole spacings in the longitudinal direction of spaced-apart fixing points (10) may be used in order to connect the cable channel trays (4) to each other.

8. A cable channel (2) with a cable channel tray according to any one of the preceding claims and a cable channel lid (14) that can be walked on having a cover member (16) which has an upper surface and a lower surface, and two lateral parts (18) protruding from the cover member (16), said lateral parts each forming a lateral edge of the cable channel lid (14), wherein the upper surface of the cover member (16) comprises a central region (30) with a slip-resistant surface and formed by stamping from the lower surface, and wherein the cover member (16) comprises stamped fixing points (38) for mounting fasteners thereon.

9. The cable channel (2) according to claim 8, wherein the fixing points (38) of the cable channel lid (14) are stamped in a repetitive pattern at a distance (B) of at least 5 mm, preferably 5 mm to 70 mm, and more preferably 10 mm to 50 mm from the lateral edge and with a distance (L) of at least 25 mm, preferably 40 mm to 100 mm, more preferably 50 mm to 75 mm to each other in the longitudinal direction of the cable channel lid (14).

10. The cable channel (2) according to claim 8 or 9, wherein the fixing points (38) of the cable channel lid (14) are arranged such that they are located in intermediate regions of the structuring of the central region (30).

11. The cable channel (2) according to any one of claims 8 to 10, wherein the fixing points (38) of the cable channel lid (14) are stamped such that at least one predetermined breaking point (44) is defined in each periphery of the fixing points (38) so that a stamped part of the cover member (16) may be opened by breaking open the predetermined breaking point (44), in particular by knocking out from the lower or upper surface of the cover member (16).

12. The cable channel (2) according to any one of claims 8 to 11, further comprising at least one fastener, in particular at least one lid retaining spring (28) and/or at least one quarter-turn lock (20) for mounting the cable channel lid (14) onto the cable channel tray (4).

13. A method for producing a cable channel tray (4) according to any one of claims 8 to 12 with the steps of:
a) providing a sheet metal strip with an upper surface and a lower surface;
b) stamping fixing points (10) for mounting fasteners such that at least one predetermined breaking point (52) is defined in each periphery of the fixing points so that a stamped part of the sheet metal strip may be opened by breaking open the predetermined breaking point (52), in particular by knocking out from one side; and
c) forming the two longitudinal edges of the sheet metal strip in order to form two lateral walls (8) and bottom (6) of the cable channel tray (4) located therebetween.

## Revendications

1. Passage de goulotte de câblage (4), présentant un fond (6) et des parois latérales (8) le passage de goulotte de câblage (4) étant formée à partir d'une tôle par façonnage et présentant des points de fixation (10) estampés dans les parois latérales (8), le passage de goulotte de câblage (4) présentant, pour relier des passages de goulotte de câblage voisines (4), un élément de raccordement (56) fixé sur une paroi latérale respective (8), qui comporte au moins deux trous oblongs (58) qui sont conçus de telle sorte que tous les espacements entre les trous dans la direction longitudinale des points de fixation (10) espacés peuvent être utilisés pour raccorder les passages de goulotte de câblage (4) entre elles,
**caractérisé en ce que**
les points de fixation (10) sont estampés de telle sorte qu'au moins un point de rupture (52) est défini respectivement dans leur zone de bord, de sorte qu'une partie estampée du passage de goulotte de câblage (4) peut être ouverte par ouverture de force du point de rupture (52).

2. Passage de goulotte de câblage (4) selon la revendication 1, dans lequel la partie estampée du passage de goulotte de câblage (4) peut être ouverte par casse d'une face intérieure ou extérieure du passage de goulotte de câblage (4).

3. Passage de goulotte de câblage (4) selon la revendication 1 ou 2, dans lequel les points de fixation sont fermés à l'état fini.

4. Passage de goulotte de câblage (4) selon l'une quelconque des revendications précédentes, les points de fixation (10) comportant chacun un renfoncement (48) sur un côté du passage de goulotte de câblage et un renflement (50) de forme essentiellement complémentaire sur le côté opposé du passage de goulotte de câblage.

5. Passage de goulotte de câblage (4) selon la revendication 4, dans lequel les renfoncements (48) sont prévus sur la face extérieure et/ou la face intérieure.

6. Passage de goulotte de câblage (4) selon la revendication 4 ou 5, dans lequel le point de rupture (52) est prévu dans une zone de transition entre le renfoncement (48) et le renflement (50).

7. Passage de goulotte de câblage (4) selon l'une des revendications 1 à 6, dans lequel l'élément de raccordement (56) comporte au moins quatre trous oblongs (58) qui sont conçus de telle sorte que tous les espacements entre les trous dans la direction longitudinale des points de fixation (10) espacés peuvent être utilisés pour raccorder les passages de goulotte de câblage (4) entre eux.

8. Goulotte de câblage (2) avec un passage de goulotte de câblage selon l'une quelconque des revendications précédentes et un couvercle de goulotte de câblage (14) praticable avec une partie de recouvrement (16), qui a une face supérieure et une face inférieure, et deux parties latérales (17, 18) faisant saillie de la partie de recouvrement (16) qui forment respectivement un bord latéral du couvercle de goulotte de câblage (14), dans laquelle la face supérieure de la partie de recouvrement (16) présente une zone centrale (30) avec une surface antidérapante, qui est formée par estampage de la face inférieure, et dans laquelle l'élément de recouvrement (16) présente des points de fixation (38) estampés pour le montage de moyens de fixation.

9. Goulotte de câblage (2) selon la revendication 8, dans laquelle les points de fixation (38) du couvercle de goulotte de câblage (14) sont disposés en un motif se répétant à une distance (B) d'au moins 5 mm, de préférence 5 mm à 70 mm et plus préférentiellement 10 mm à 50 mm, du bord latéral et à une distance (L) d'au moins 25 mm, de préférence 40 mm à 100 mm, plus préférentiellement 50 mm à 75 mm, les uns des autres dans la direction longitudinale du couvercle de goulotte de câblage (14).

10. Goulotte de câblage (2) selon la revendication 8 ou 9, dans laquelle les points de fixation (38) du couvercle de goulotte de câblage (14) sont disposés de sorte qu'ils se situent dans des zones intermédiaires de la structuration de la zone centrale (30).

11. Goulotte de câblage (2) selon l'une quelconque des revendications 8 à 10, dans laquelle les points de fixation (38) du couvercle de goulotte de câblage (14) sont estampés de telle sorte qu'au moins un point de rupture (44) est défini respectivement dans leur zone de bord, de sorte qu'une partie estampée de la partie de recouvrement (16) peut être ouverte par ouverture de force du point de rupture (44), en particulier par casse de la face inférieure ou supérieure de la partie de recouvrement (16).

12. Goulotte de câblage (2) selon l'une quelconque des revendications 8 à 11, en outre comprenant au moins un moyen de fixation, en particulier au moins un ressort de retenue de couvercle (28) et/ou au moins un verrou tournant (20) pour la fixation du couvercle de goulotte de câblage (14) sur le passage de goulotte de câblage (4).

13. Procédé pour la fabrication d'un passage de goulotte de câblage (4) selon l'une quelconque des revendications 8 à 12, avec les étapes :
a) de fourniture d'une bande de tôle avec une face supérieure et une face inférieure ;
b) l'estampage de points de fixation (10) pour le montage de moyens de fixation, de telle sorte qu'au moins un point de rupture (52) est défini respectivement dans leur zone de bord, de sorte qu'une partie estampée de la bande de tôle peut être ouverte par ouverture de force du point de rupture (52), en particulier par casse d'une face ; et
c) de façonnage des deux bords longitudinaux de la bande de tôle, afin de former deux parois latérales (8) et un fond (6) du passage de goulotte de câblage (4) situé entre celles-ci.
